# EUROPÄISCHE PATENTANMELDUNG

(11) **EP 4 086 754 A1**
(43) Veröffentlichungstag der Anmeldung: **09.11.2022**
(21) Anmeldenummer: 21171840.8
(22) Anmeldetag: 03.05.2021
(51) Int. Cl.: G06F 8/34, G06F 8/35

(54) **VERFAHREN ZUR RECHNERGESTÜTZTEN KONFIGURATION EINES ENDGERÄTS, ENDGERÄT UND BETRIEBSVERFAHREN FÜR DAS ENDGERÄT**

(71) Anmelder: Siemens Aktiengesellschaft, 80333 München (DE)
(72) Erfinder: Betzin, Christopher, 91301 Forchheim (DE); Grillenberger, Michael, 90427 Nürnberg (DE); Bucher, Stefan, 93047 Regensburg (DE); Gröger, Andreas, 81735 München (DE)

(57) **Zusammenfassung**

In einem grafischen Editor wird ein Betriebsablauf für ein mikrocontroller-gesteuertes Endgerät erstellt. Aus dem Betriebsablauf wird eine Konfigurationsdatei erstellt, die eine Textdatei ist. Die Konfigurationsdatei wird an das Endgerät übermittelt. Ein auf dem Endgerät laufendes Betriebssystem verarbeitet die Textdatei und steuert den Betriebsablauf des Endgeräts durch Aufruf von kompilierten Codeblöcken basierend auf der Konfigurationsdatei.

## Beschreibung

Die Erfindung betrifft ein Verfahren zur rechnergestützten Konfiguration eines Endgeräts, wobei das Endgerät von einem Mikrocontroller gesteuert wird und ein Betriebsablauf für das Endgerät in einer Konfigurationssoftware eingegeben wird. Die Erfindung betrifft weiterhin ein solches Endgerät sowie ein Verfahren zu dessen Betrieb.

Der Trend bei Energieanlagen und anderen Anlage wie beispielsweise dezentralen Antriebssystemen geht von großen, zentralen Einheiten zu keinen, verteilten Einheiten. Durch die steigende Zahl von kleinen Geräten, wie beispielsweise Batteriespeicher und/oder Photovoltaik-Anlagen im Heimbereich oder kleinen Antrieben in der Automatisierung, steigt die Systemkomplexität drastisch an. Viele verschiedene kleine Einheiten - oft von verschiedenen Herstellern - müssen miteinander kommunizieren, robuste Gesamtsysteme bilden, einfach in Betrieb setzbar und bedienbar sein. Zudem wird heute erwartet, dass entsprechende Lösungen in der Lage sind, die betreffenden Geräte weltweit zu managen, das heißt beispielsweise ein Firmware-Update zu ermöglichen, zu steuern und zu beobachten sowie generierte Daten analysieren zu können.

Auf der Endgeräte-Ebene wird bisher hauptsächlich versucht, existierende Lösungen zu ertüchtigen, die neuen Anforderungen abzudecken. Fortschrittlichere Lösungen zielen darauf ab, durch eine vereinfachte Inbetriebnahme, offene Programmierschnittstellen und Betriebssysteme die Flexibilität signifikant zu erhöhen, um die neuen Anforderungen abzudecken. Zum weltweiten Beobachten, Steuern, Regeln und Daten-Analysieren kommen typischerweise sogenannte Backends auf Cloud-Lösungen wie Amazon AWS oder Microsoft Azure zum Einsatz. Zur Bedienung werden typischerweise Web-Portale oder Mobil-Apps verwendet.

Auf den Endgeräten wiederum wird eine für den jeweiligen Mikrocontroller kompilierte Version einer jeweiligen Betriebssoftware (Firmware) verwendet. Updates für diese Betriebssoftware werden typischerweise heute schon von den Geräten selbsttätig aus dem Internet geladen und können dann installiert werden. Da dabei die im Moment des Updates laufende Betriebssoftware ersetzt wird, ist dieser Update-Prozess kritisch und wird üblicherweise von entsprechenden Warnungen begleitet, das Gerät auf keinen Fall während des Updates abzuschalten. Eine flexible Anpassung der Firmware ist auf diese Weise schwierig und die Einbindung eines Endusers nötig und häufige Updates bergen stets ein Risiko.

Es ist Aufgabe der vorliegenden Erfindung, Verfahren und ein Endgerät anzugeben, mit dem die eingangs genannten Nachteile vermindert werden.

Diese Aufgabe wird durch ein Verfahren mit den Merkmalen von Anspruch 1 gelöst. Eine weitere Lösung besteht in dem Endgerät mit den Merkmalen von Anspruch 9 und dem Betriebsverfahren für das Endgerät mit den Merkmalen von Anspruch 11.

Bei dem erfindungsgemäßen Verfahren zur rechnergestützten Konfiguration eines Endgeräts, dessen Betrieb von einen Mikrocontroller gesteuert wird, wird ein Betriebsablauf für das Endgerät unter Verwendung von abstrahierten Komponenten aus einer Menge von bereitgestellten abstrahierten Komponenten in einer Konfigurationssoftware zusammengestellt. Die Konfigurationssoftware weist dafür eine grafische Benutzeroberfläche auf. Die Menge von abstrahierten Komponenten umfasst wenigstens Dateneingänge, Datenausgänge und wenigstens einen Zustandsautomat als hardwareunabhängige Abstraktion einer Recheneinheit. Beispiele für die abstrahierten Komponenten sind CAN-Bus-Schnittstellen, GPIOs (General Purpose Input Outputs) oder Feldbus-Schnittstellen.

Die abstrahierten Komponenten sind dabei hardwareunabhängig, d.h. sie repräsentieren logische Vorgänge. Diese logischen Vorgänge, beispielsweise Dateneingänge oder Datenausgänge, können in realer Hardware als einzelner Baustein, als Teil eines Bausteins oder sogar als mehrere Bausteine umgesetzt werden. Dabei können auch mehrere Möglichkeiten bestehen, den logischen Vorgang in Hardware abzubilden.

Aus dem Betriebsablauf wird eine Konfigurationsdatei erzeugt. Die Konfigurationsdatei ist eine Textdatei und repräsentiert den Betriebsablauf, d.h. sie enthält Informationen, aus denen sich der Betriebsablauf vollständig rekonstruieren lässt. Die Konfigurationsdatei kann darüber hinaus auch weitergehende Informationen enthalten. Unter einer Textdatei wird dabei eine Datei verstanden, die menschenlesbare Informationen enthält, in der also keine Komprimierung der Information stattfindet, sondern Buchstaben, Wörter und Zahlen in ASCIIcodierter oder einer vergleichbaren Form vorliegen. Die Konfigurationsdatei ist also nicht in einer herkömmlichen Form ausführbar, wobei als ausführbar üblicherweise solche Dateien verstanden werden, deren Inhalte direkt und ohne Übersetzung in serieller Form an einen Rechner übergeben werden können und von diesem ausgeführt werden können und dabei ein sinnvolles Ergebnis produzieren. Die Konfigurationsdatei kann dabei beispielsweise im JSON-Format vorliegen oder eine XML-Datei sein.

Die Konfigurationsdatei wird in der Folge auf das Endgerät übermittelt. Dabei bleibt die Konfigurationsdatei eine Textdatei, die nicht kompiliert wird. Lediglich für die Übermittlung, beispielsweise über das Internet, ist es möglich, dass die Konfigurationsdatei komprimiert und am Ende der Übermittlung dekomprimiert oder dass die Konfigurationsdatei verschlüsselt und am Ende der Übermittlung entschlüsselt wird.

Schließlich wird die Konfigurationsdatei durch eine auf dem Mikrocontroller des Endgeräts laufende Betriebssoftware verarbeitet und das Endgerät derart vom Mikrocontroller gesteuert, dass der Betriebsablauf, den die Konfigurationsdatei wiedergibt, durchgeführt wird.

Das erfindungsgemäße Endgerät mit einem Mikrocontroller als Steuereinheit weist eine Betriebssoftware auf, die auf dem Mikrocontroller ausführbar ist, wobei die Betriebssoftware ausgestaltet ist, eine auf dem Endgerät gespeicherte Konfigurationsdatei zu verarbeiten, wobei die Konfigurationsdatei eine Textdatei ist und einen Betriebsablauf für das Endgerät repräsentiert, und das Endgerät so zu steuern, dass der Betriebsablauf durchgeführt wird.

Bei dem erfindungsgemäßen Betriebsverfahren für ein Endgerät mit einem Mikrocontroller als Steuereinheit wird eine auf dem Endgerät gespeicherte Konfigurationsdatei verarbeitet, wobei die Konfigurationsdatei eine Textdatei ist und einen Betriebsablauf für das Endgerät repräsentiert, und das Endgerät so gesteuert, dass der Betriebsablauf durchgeführt wird. Das Betriebsverfahren kann konkret als Computerprogrammprodukt, also beispielsweise als auf einem Datenträger gespeichertes Programm vorliegen.

Die Erfindung schafft also ein Endgerät, das in der Lage ist, einen Betriebsablauf zu verarbeiten, für den keine monolithische Firmware vorliegt. Vielmehr liegt im Endgerät eine Trennung der Software in eine Betriebssoftware vor, die nicht vom Betriebsablauf abhängig ist, also verschiedene Betriebsabläufe unterstützt und die Konfigurationsdatei, die kein Programm, sondern eine Textdatei ist, und anhand derer die Betriebssoftware den Betriebsablauf erzeugt, also umsetzt. Dieses Endgerät kann in ein System eingebunden sein, in dem die Konfigurationsdatei in einem grafischen Editor erzeugt wird, indem dort der Betriebsablauf aus abstrahierten Komponenten zusammengesetzt wird. Änderungen am Betriebsablauf können also leichter umgesetzt werden, da sie keine direkte Programmierarbeit an einem monolithischen Code erfordern. Weiterhin ist das Übermitteln der Konfigurationsdatei an das Endgerät und die Umsetzung auf dem Endgerät wesentlich unkomplizierter als bei herkömmlicher Firmware, da die Konfigurationsdatei im laufenden Betrieb ersetzt werden kann. Da das eigentliche laufende Programm auf dem Mikrocontroller, also die Betriebssoftware, selbst bei einer Änderung des Betriebsablaufs nicht geändert wird, kann die Anpassung der Konfigurationsdatei im laufenden Betrieb erfolgen und spezielle Warnungen der Art "Bitte schalten Sie das Gerät auf keinen Fall aus" sind unnötig. Selbst der menschliche Eingriff in den Update-Prozess beim Endgerät selbst kann entfallen, da das Risiko eines Update-Vorgangs wesentlich geringer ist als bei bekannter Firmware.

Vorteilhafte Ausgestaltungen der Erfindung gehen aus den abhängigen Ansprüchen hervor. Dabei kann die Ausführungsform nach den unabhängigen Ansprüchen mit den Merkmalen eines der Unteransprüche oder vorzugsweise auch mit denen aus mehreren Unteransprüchen kombiniert werden. Demgemäß können noch zusätzlich folgende Merkmale vorgesehen sein:
Das Verarbeiten der Konfigurationsdatei durch die Betriebssoftware kann eine Auswertung der Konfigurationsdatei und ein Aufrufen einzelner vorkompilierter Softwareblöcke basierend auf der Konfigurationsdatei umfassen. Für die verschiedenen logischen Komponenten liegen also bevorzugt kompilierte Softwareblöcke vor und die Betriebssoftware ist ausgestaltet, diese Softwareblöcke aufzurufen, um den Betriebsablauf abzubilden. Dabei bilden die Softwareblöcke also eine Verbindung zwischen den hardware-unabhängigen logischen Komponenten und der tatsächlichen Hardware, für die die Softwareblöcke angepasst sind. Die Softwareblöcke sind daher zwar für die Betriebssoftware notwendig, aber sie können sich auf verschiedenen Endgeräten voneinander unterscheiden, da ein Softwareblock für eine erste Hardware, beispielsweise einen ersten Mikrocontroller sich von einem Softwareblock für eine zweite Hardware, beispielsweise einen zweiten Mikrocontroller unterscheiden kann, obwohl beide Softwareblöcke dieselbe abstrahierte Komponente betreffen.

Besonders vorteilhaft ist es, wenn die Konfigurationssoftware abstrahierte Formen von einer Mehrzahl von Mikrocontrollern und Peripherie-ICs aufweist, wobei diese abstrahierten Formen wenigstens die Eingabe- und Ausgabe-Möglichkeiten der Mikrocontroller und Peripherie-ICs abbilden und bei dem nach Eingabe eines Betriebsablaufs für einen oder mehrere verschiedenen Mikrocontroller anhand der abstrahierten Formen ermittelt wird, welche Peripherie-ICs zusätzlich zum Mikrocontroller benötigt werden und das Ergebnis ausgegeben wird. Es wird mit anderen Worten für verschiedene Mikrocontroller ermittelt, welche konkrete Hardware zusätzlich zum Mikrocontroller benötigt wird, um den Betriebsablauf umzusetzen. Dadurch kann durch einen Vergleich der sich insgesamt ergebenden Hardware eine optimale Hardware ausgewählt werden.

Insgesamt ergibt sich durch das beschriebene System auch eine wesentlich verbesserte Unabhängigkeit von einem konkreten Fabrikat oder Hersteller. Eine Änderung der verwendeten Hardware wird dahingehend unterstützt, dass die nötigen Anpassungen in Bezug auf Peripherie-ICs von der Konfigurationssoftware ausgegeben werden. Weiterhin ist keine Anpassung einer Firmware an einen veränderten Mikrocontroller notwendig, sondern die Konfigurationsdatei kann entweder unverändert weiterverwendet werden oder wird vom der Konfigurationssoftware aus dem - unveränderten - Betriebsablauf neu erzeugt.

Weist die Konfigurationssoftware eine abstrahierte Form für jedes der im konkret vorliegenden Endgerät verwendeten Mikrocontroller und, sofern vorhanden, Peripherie-ICs auf, wobei diese abstrahierten Formen die Eingabe- und Ausgabe-Möglichkeiten des jeweiligen Mikrocontrollers oder Peripherie-ICs abbilden, dann kann nach Eingabe eines Betriebsablaufs geprüft werden, ob der mit den abstrahierten Komponenten aufgebaute Betriebsablauf unter Verwendung der abstrahierten Formen auch tatsächlich durchführbar ist und das Ergebnis der Prüfung ausgegeben werden. Dabei ist es auch möglich, dass die Konfigurationssoftware die Menge und/oder Verwendung der angebotenen abstrahierten Komponenten so einschränkt, dass ein damit zusammengestellter Betriebsablauf von der Hardware des Endgeräts durchführbar ist. Vorteilhaft wird also eine direkte Rückmeldung in Bezug auf die Hardware-Fähigkeiten ermöglicht, das bei einem Code-Editor nach Art eines C-Compilers nicht möglich ist.

Die Konfigurationsdatei kann neben dem Endgerät auch einem Cloud-basierten Rechensystem übermittelt werden und dazu verwendet werden, eine Datenverbindung zwischen dem Rechensystem und dem Endgerät aufzubauen, wobei das Cloud-basierte Rechensystem in der Folge Daten vom Endgerät empfängt, beispielsweise über das Protokoll MQTT. Vorteilhaft ermöglicht die Konfigurationsdatei also neben der Ausführung eines Betriebsablaufs in einem Mikrocontroller auch die Konfiguration einer Datenverbindung zwischen beispielsweise einem Cloud-Service und dem Endgerät. Eine herkömmliche Firmware ist für eine solche Auswertung, bei der ein anderes Rechensystem bestimmte Eigenheiten wie Datenausgänge erkennen muss, praktisch nicht zugänglich. Vielmehr müssen solche Schnittstellen manuell definiert werden und oft von verschiedenen Gruppen von Entwicklern getrennt voneinander umgesetzt werden, was zu Fehlern führen kann. Die Konfigurationsdatei hingegen enthält automatisch alle nötigen Informationen.

Weitere Vorteile und Merkmale sind der folgenden Beschreibung eines Ausführungsbeispiels anhand der Figuren der Zeichnung zu entnehmen. Dabei zeigen:
Figur 1 die Hardware-Seite und die Software-Seite einer Steuerung mit einem Mikrocontroller,
Figur 2 einen grafisch aus abstrahierten Komponenten in einem grafischen Editor zusammengestellten Betriebsablauf für die Steuerung,
Figur 3 Hardware-Entwürfe für den Betriebsablauf mit verschiedenen Fabrikaten von Mikrocontrollern,
Figur 4 das Zusammenwirken der Steuerung mit einem Smartphone und einem Cloud-Service über eine verteilt vorliegende Konfigurationsdatei.

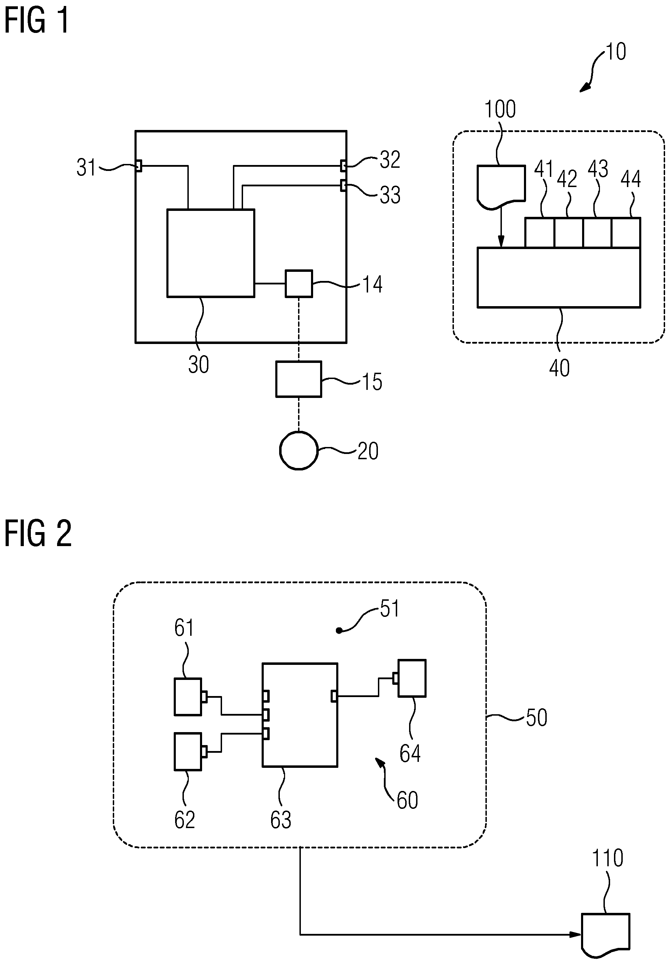

Figur 1 zeigt eine Steuerungseinrichtung 10 für eine industrielle Prozessanlage, beispielsweise eine Heizanlage. Bei der Prozessanlage kann es sich beispielsweise um eine Heizanlage oder um einen Antrieb, also Motor, handeln. Generell ist die Art der gesteuerten Anlage nur beispielhaft und die Erfindung ist genauso für eine Auswerteschaltung einsetzbar, die in einem Hutschienengehäuse angeordnet ist. Die Steuerungen solcher Endgeräte haben gemeinsam, dass sie einen Mikrocontroller 30, engl. auch als MCU (microcontroller unit) bezeichnet, aufweisen, der die nötigen Abläufe bewirkt.

Bei der beispielhaften Steuerung 10, die sehr vereinfacht dargestellt ist, ist der Mikrocontroller 30 mit einem WiFi-Chip 14 verbunden, der die Herstellung einer Verbindung zu einem Router 15 und darüber in das Internet 20 erlaubt. Statt einem WiFi-Chip 14 oder sogar zusätzlich könnte für denselben Zweck auch ein kabelgebundener LAN-Anschluss oder eine UMTS-Schnittstelle vorhanden sein. Weiterhin ist der Mikrocontroller 30 mit einer Eingangsschnittstelle 31 verbunden, die in diesem Beispiel einen Temperaturmesswert zur Verfügung stellen soll. Ferner ist der Mikrocontroller 30 mit zwei Ausgangsschnittstellen 32, 33 verbunden, die zur Ausgabe von Ansteuerungssignalen an die angebundene Heizanlage dienen.

Der beschrieben Teil der Figur 1 stellt somit die schematisch wiedergegebene Hardware-Seite der Steuerung 10 dar. Dabei ist diese Darstellung zumindest bei typischen Steuerungen 10 nicht vollständig, beispielsweise umfassen diese typischerweise noch andere Bausteine. Solche Bausteine können beispielsweise Peripherie-ICs und Speicherbausteine sein.

Neben der Hardware-Seite ist in Figur 1 auch die Software-Seite der Steuerung 10 gezeigt. Diese ist weitgehend im Mikrocontroller 30 angeordnet und findet dort ihre Ausführung. Während in bekannten Steuerungen typischerweise eine monolithische Firmware zur Anwendung kommt, die ein vollständiges kompiliertes Programm darstellt, ist die in der Steuerung 10 verwendete Software in Teile gegliedert, die anders als bei bekannten Steuerungen arbeitet.

Der zentrale Teil der Software für das Endgerät, also die Steuerung 10, wird von dem Betriebssystem 40 gebildet. Das Betriebssystem 40 wird in Anlehnung an Betriebssysteme von PCs und anderen elektronischen Geräten mit Mikroprozessoren so genannt, da es analog dazu eine Basis bildet, die Grundfunktionen zur Verfügung stellt, auf der die eigentliche Funktionalität des Geräts aber noch aufgesetzt wird. Das Betriebssystem 40 kann dabei unverändert bleiben, auch wenn die Funktionalität des jeweiligen Geräts, also hier des Mikrocontrollers 30 geändert wird.

Das Betriebssystem 40 umfasst Programmblöcke 41...44, die vordefinierte Abläufe auf dem Mikrocontroller 30 ausführen können. Beispielsweise kann ein erster Programmblock 41 eine ihm als Parameter übergebene Zahl als Spannungswert an einem Ausgang des Mikrocontrollers 30 ausgeben. Ein zweiter Programmblock 42 führt eine Berechnung, deren genaue Art als Parameter an den Programmblock 42 übergeben wird, an einem weiteren Eingangsparameter aus und gibt das Ergebnis der Berechnung als Rückgabewert aus. Die Programmblöcke setzen auf dem Mikrocontroller 30 abstrahierte Vorgänge in tatsächliche Aktionen um.

Mit den bisher beschriebenen Komponenten bieten sich für den Mikrocontroller 30 Möglichkeiten, eine Betriebsform zu realisieren, es liegt aber noch keine konkrete Ausführungsanordnung vor. Diese wird nun von einer Konfigurationsdatei 100 gegeben, die im Speicher des Mikrocontrollers 30 vorliegt.

Die Konfigurationsdatei 100 ist eine Textdatei. Unter einer Textdatei wird eine Datei verstanden, die menschenlesbare Informationen enthält, in der also keine Komprimierung der Information stattfindet. Die Textdatei enthält also im Wesentlichen ASCII-codierte Buchstaben und Zahlen. Neben der ASCII-Kodierung gibt es auch andere Standards, die aber im Bereich der Zahlen und lateinischen Buchstaben mit ASCII deckungsgleich sind und bei einer Darstellung auf einem PC oder vergleichbaren Gerät lesbaren Text und Zahlen ergeben, ohne dass eine Dekomprimierung stattfinden muss. Typische bekannte Dateien, die üblicherweise als Textdateien gespeichert sind, sind XML-Dateien, HTML-Dateien und JSON-Dateien.

Im vorliegenden Beispiel wird eine Konfigurationsdatei 100 verwendet, die Daten im JSON-Format (JavaScript Object Notation) enthält. Die Daten geben unter anderem an, wie die Programmblöcke 41...44 in einem Betriebsablauf für den Mikrocontroller 30 zu verwenden sind. Die Konfigurationsdatei 100 enthält jedoch keinen kompilierten Programmcode. Die Konfigurationsdatei 100 an sich - ohne das Betriebssystem 40 - wäre für den Mikrocontroller 30 also ohne Nutzen und der Mikrocontroller 30 könnte sich nicht ausführen, selbst wenn sie dort gespeichert wäre. Das Betriebssystem 40 jedoch kann den Inhalt der Konfigurationsdatei 100 interpretieren und die Ausführung der dafür nötigen Programmblöcke 41...44 veranlassen.

Im folgenden ist ein Auszug aus einer derartigen Konfigurationsdatei 100 wiedergegeben: 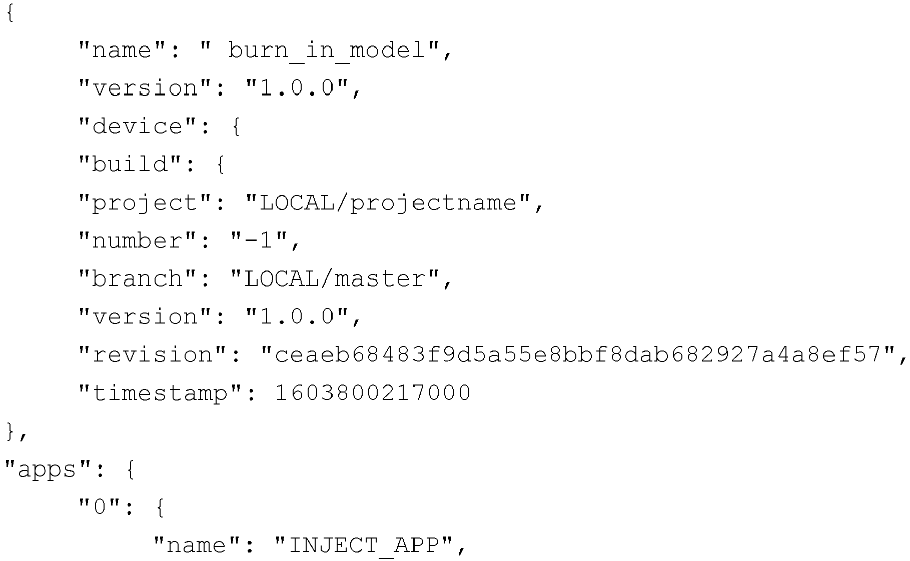 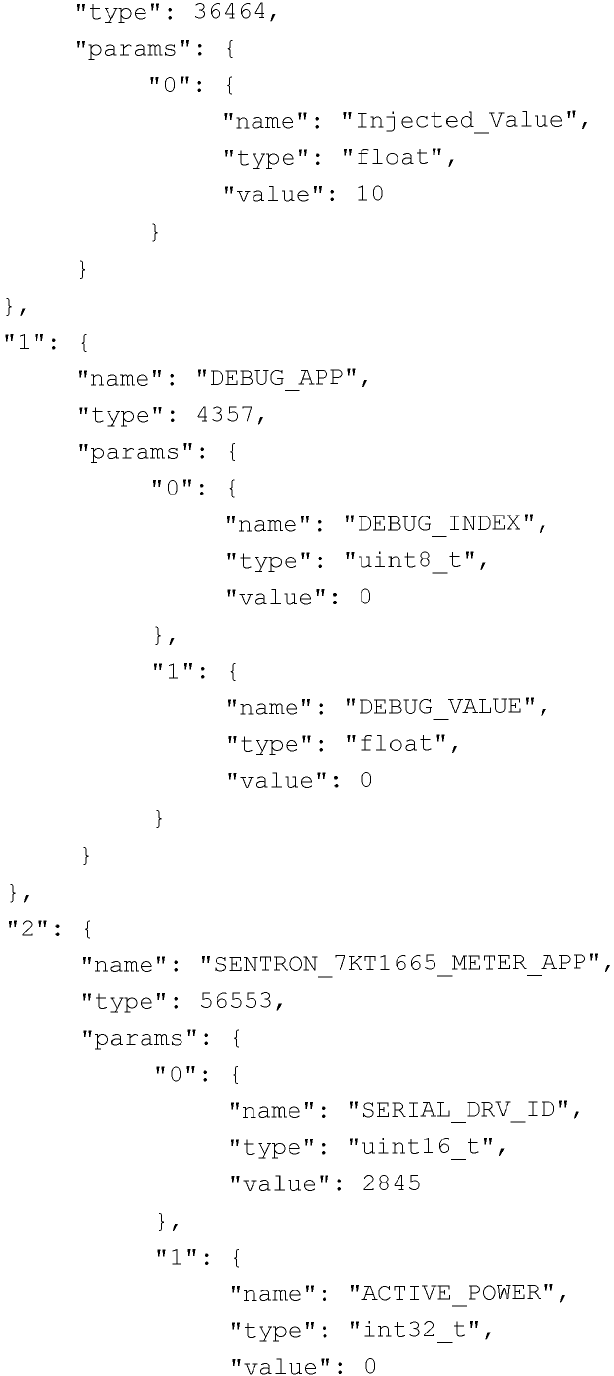 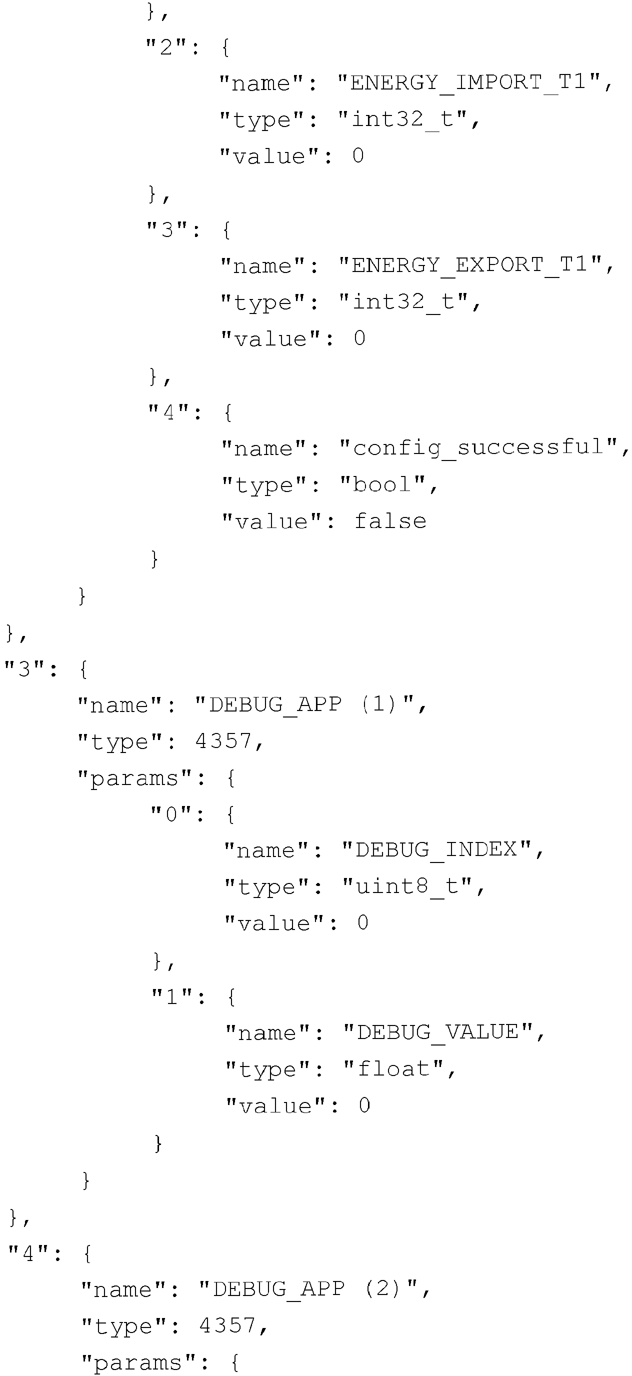 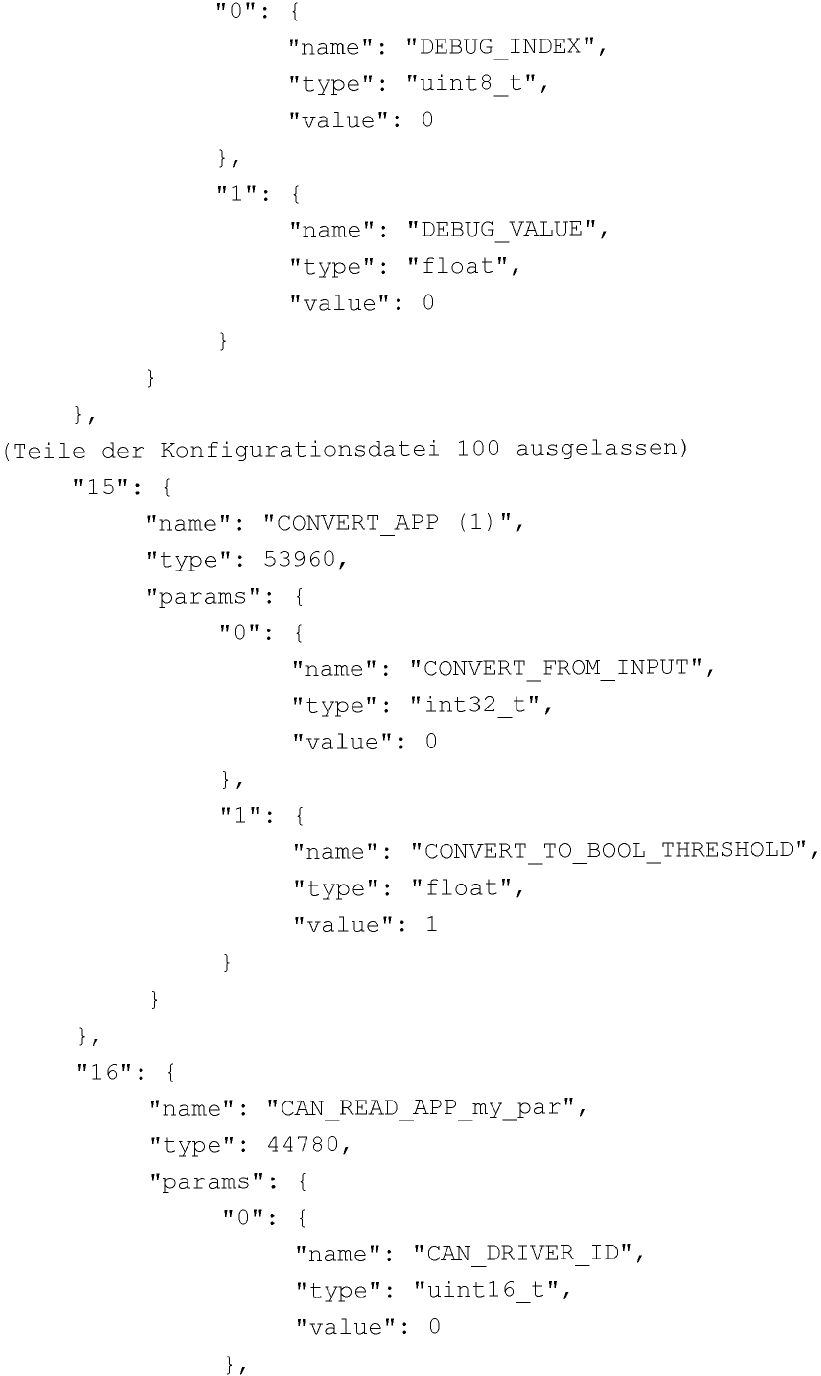 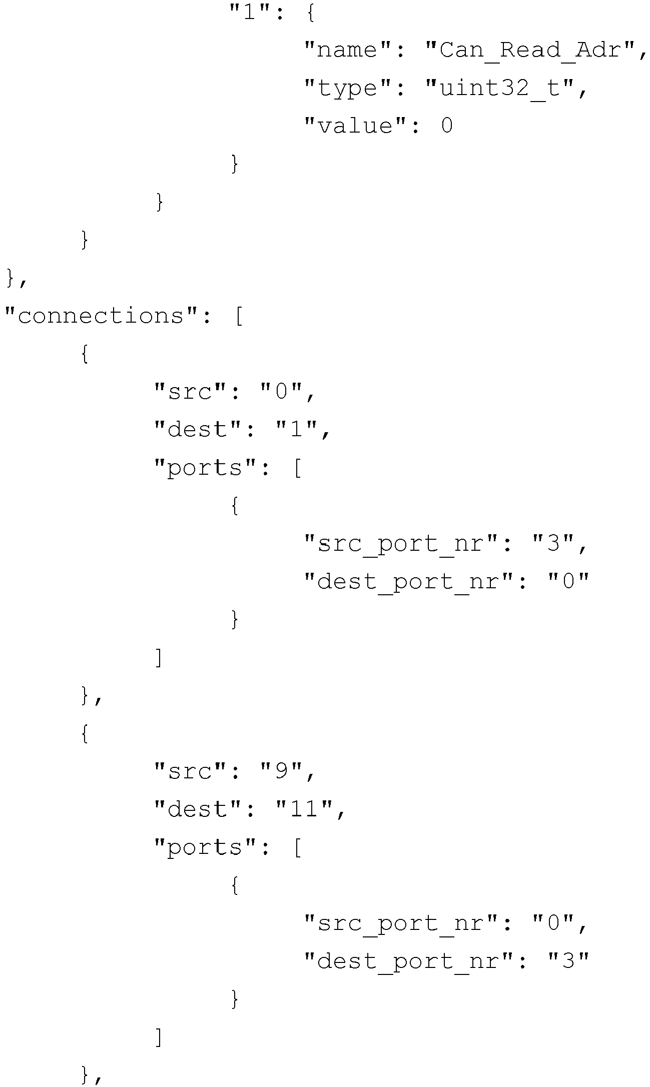 (Teile der Konfigurationsdatei 100 ausgelassen)

Die Konfigurationsdatei 100 gibt sowohl Funktionsblöcke als auch deren Verbindungen an. Die Funktionsblöcke entsprechen den Programmblöcken 41...44 und die Verbindungen entsprechen der Reihenfolge der Ausführung der Programmblöcke 41...44 und der Weitergabe von Rückgabewerten der Programmblöcke 41...44 als Eingangsparameter für jeweils folgende Programmblöcke 41...44.

Im Auslieferungszustand kann neben dem Betriebssystem 40 bereits eine Konfigurationsdatei 100 vorliegen, die vom Betriebssystem 40 interpretiert werden kann und somit einen Betriebsablauf des Mikrocontrollers 30 steuern kann. Wie häufig bei Endkundengeräten festzustellen, ist aber schon im Zeitpunkt der Inbetriebnahme eines neuen Geräts ein Update der Software nötig oder empfohlen. Bei herkömmlichen Geräten erfordert das, dass eine neue monolithische Firmware heruntergeladen und dann installiert wird. Diese Installation überschreibt die bisherige Software und birgt daher das Risiko, dass das Endgerät nicht mehr funktioniert, wenn der Update-Vorgang unterbrochen wird.

Bei der Steuerung 10 hingegen bestehen zwei Möglichkeiten eines Software-Updates. Zum Einen kann für das Betriebssystem 40 ein Update vorliegen. Ein solches Update entspricht in etwa dem bereits beschriebenen Firmware-Update. Da aber das Betriebssystem hauptsächlich grundlegende Funktionen bereitstellt und nicht von Einzelheiten des Betriebsablaufs abhängt, ist ein Update dafür vergleichsweise selten nötig. Ein typisches Software-Update, mit dem Änderungen im Betriebsablauf der Steuerung 10 vorgenommen werden, besteht aber nur in einem Austausch der Konfigurationsdatei 100 durch eine neue Konfigurationsdatei 110. Da dieser Austausch nicht das eigentlich auf dem Mikrocontroller 30 laufende Programm ersetzt, kann dieser Austausch problemlos im laufenden Betrieb stattfinden und birgt kein Risiko, das Gerät bei Unterbrechung zu schädigen.

Ist die Konfigurationsdatei 100 durch die neue Konfigurationsdatei 110 ersetzt, liest und interpretiert das Betriebssystem 40 die neue Konfigurationsdatei 110 und erstellt daraus eine interne Interpretation, die den Ablauf der Programmblöcke 41...44 reguliert. Ein solches Software-Update kann also gefahrlos häufig durchgeführt werden. Je nach Anwendung ist es möglich, dass dazu kein manueller Eingriff mehr erforderlich ist wie bei einem herkömmlichen Update, bei dem schon aus Sicherheitsgründen ein menschlicher Nutzer den Eingriff explizit starten muss.

Eine herkömmliche Firmware wird üblicherweise mittels eines Codeeditors, beispielsweise für die Programmiersprachen C oder Java, erstellt. Sie ist dabei praktisch zwingend angepasst an die jeweilige Hardware, also den Mikrocontroller 30 und seine Peripherie-ICs, da die Firmware in der Folge nur kompiliert eben diesem Mikrocontroller 30 überspielt wird, sodass sie dessen Fähigkeiten und Eigenheiten verwenden muss und keine anderen verwenden kann.

Die Konfigurationsdateien 100, 110 hingegen werden mit einem grafischen Editor 50 erstellt. Figur 2 zeigt einen vereinfachten Betriebsablauf 60 für die Steuerung 10, der auf einer Bildfläche 51 in dem grafischen Editor 50 erstellt ist. Der Betriebsablauf 60 ist zusammengesetzt aus grafisch als Block dargestellten abstrahierten Komponenten 61...64. Die Komponenten stellen dabei funktionelle Blöcke dar, die nicht hardware-spezifisch sind. Es handelt sich dabei um einen CAN-Bus-Eingang 61, einen allgemeinen Eingang 62 (einen sog. GPIO, General Purpose Input-Output), eine State Machine oder Zustandsautomat 63 und einen allgemeinen Ausgang 64.

Die Komponenten 61...64 sind nicht hardware-spezifisch, was bedeutet, dass die Komponenten 61...64 und die tatsächlich in der Steuerung 10 vorhandene Hardware nicht in einer bijektiven Beziehung stehen. So können beispielsweise Eingänge und Ausgänge eigene Komponenten 61...64 bilden, obwohl sie in der Steuerung Teil des Mikrocontrollers 30 sind. Umgekehrt können Funktionalitäten in einer Komponente 61...64 vereint sein, die in der Steuerung 10 als diskrete verschiedene Hardware-Bausteine realisiert sind. Der Betriebsablauf 60 wird somit in dem grafischen Editor 50 hardware-unabhängig modelliert.

Für die Modellierung werden die für den Betriebsablauf 60 notwendigen Komponenten 61...64 aus einer Bibliothek von Komponenten 61...64 ausgewählt und grafisch auf der Bildfläche platziert. Sodann werden die Komponenten 61...64 in einer Weise verknüpft, die den Betriebsablauf 60 in seinem zeitlichen Ablauf und Zusammenhang der Ein- und Ausgabewerte wiedergibt. Dabei können wesentlich mehr Komponenten 61...64 zur Verfügung stehen, als im Betriebsablauf 60 tatsächlich verwendet werden. Ist der Betriebsablauf 60 vollständig eingegeben, dann erzeugt der grafische Editor 50 aus den verwendeten Komponenten 61...64 und den Verknüpfungen zwischen den Komponenten 61...64 die Konfigurationsdatei 110. Die neue Konfigurationsdatei 110 enthält dabei zumindest die notwendigen Angaben, um den Betriebsablauf 60 in der Steuerung 10 umsetzen zu können. Darüber hinaus können aber auch noch weitere Angaben vorhanden sein. Nicht alle Angaben in der Konfigurationsdatei 110 müssen notwendigerweise vom Betriebssystem 40 verwendet werden, um den Betriebsablauf 60 in der Steuerung 10 umzusetzen.

Die erzeugte neue Konfigurationsdatei 110 wird an die Steuerung 10 übertragen. Das kann im Prinzip auf verschiedenen Wegen passieren, der heute übliche Weg ist aber ein Bereitstellen auf einem über das Internet 20 erreichbaren Server und ein Hinweis an die Steuerung 10, ein Update vorzunehmen oder ein aktives Überspielen von einem mobilen Computer, beispielsweise einem Tablet-PC auf die Steuerung 10. In der Steuerung 10 wird die bisherige Konfigurationsdatei 100 durch die neue Konfigurationsdatei 110 ersetzt. Dies kann automatisch passieren oder nach einer manuellen Bestätigung für das Update. Ebenso kann dieses Update passieren, ohne dass der Betriebsablauf 60 der Steuerung 10 dabei unterbrochen wird. Auf diese Weise können also Updates des Betriebsablaufs 60, die herkömmlich einen manuellen User-Eingriff und eine zeitweise Unterbrechung des Betriebs erfordert hätten, unproblematisch und ohne Risiko vorgenommen werden. Das Betriebssystem 40 wird dabei nicht verändert, lediglich die Konfigurationsdatei 100, 110, die als Textdatei vorliegt.

Da die Komponenten 61...64 im grafischen Editor 50 hardwareunabhängig sind, lässt sich mit ihnen auch ein Betriebsablauf 60 modellieren, der mit einer konkret vorliegenden Steuerung 10 gar nicht umsetzbar ist. Das kann beispielsweise der Fall sein, wenn ein Dateneingang verwendet wird, der auf der Steuerung nicht als tatsächliche Schnittstelle vorhanden ist. Beispielsweise kann der Betriebsablauf eine Dateneingabe von einem CAN-Bus-Eingang 61 verwenden und die Steuerung 10 umfasst keinen CAN-Bus-Anschluss. Um diesem Problem zu begegnen, ist es zweckmäßig, wenn dem grafischen Editor 50 die Informationen zu der in der Steuerung 10 vorliegenden Hardware bekannt sind, also entsprechende Daten eingegeben worden und gespeichert sind.

Die Daten zur tatsächlichen Hardware können beispielsweise eingegeben und gespeichert werden, indem dem grafischen Editor 50 abstrahierte Formen der Hardware-Elemente vorliegen. Die Hardware-Elemente sind dabei insbesondere der Mikrocontroller 30 selbst und eventuell vorliegende Peripherie-ICs, beispielsweise eben ein CAN-Bus-Anschluss. Die abstrahierten Formen umfassen in jeweils abstrahierter Weise die Hardware-Gegebenheiten. Abstrahiert bedeutet in diesem Fall, dass die Hardware-Gegebenheiten zumindest soweit in der abstrahierten Form gespeichert sind, wie sie für ein Mapping des Betriebsablaufs 60 aus den Komponenten 61...64 auf die abstrahierte Form notwendig sind, dass aber andere Hardware-Gegebenheiten nicht alle in der abstrahierten Form gespeichert sind. Es muss mit anderen Worten nur möglich sein, den hardware-unabhängigen Betriebsablauf 60 in einen hardwareabhängigen Betriebsablauf 60 umzurechnen. Beispielsweise muss für die abstrahierte Form des Mikrocontrollers 30 gespeichert sein, welche Schnittstellen der Mikrocontroller 30 aufweist. So ist es dem grafischen Editor 50 möglich, zu bestimmen, ob und wie ein Dateneingang schon mit dem Mikrocontroller 30 selbst umgesetzt werden kann. Unnötig für die abstrahierte Form ist beispielsweise die Dicke des Mikrocontrollers 30.

Mit den abstrahierten Formen ist es dem grafischen Editor 50 auch möglich, festzustellen, ob die in der Steuerung 10 vorliegende Hardware den Betriebsablauf 60 überhaupt umsetzen kann. Ist das nicht der Fall, kann der grafische Editor 50 einen entsprechenden Hinweis ausgeben. Auch kann der grafische Editor 50 von vornherein solche der Komponenten 61...64, die mit der Hardware der Steuerung 10 nicht umsetzbar sind, mit entsprechenden Warnzeichen versehen oder die Verwendung einschränken.

In einem anderen Anwendungsfall ist es auch möglich, dass die Zusammenstellung des Betriebsablaufs 60 hardware-unabhängig geschehen soll, dass also keine Prüfung und keine Einschränkung anhand einer konkreten Hardware erfolgen soll. In diesem Fall kann jeder beliebige Betriebsablauf 60 zusammengestellt werden. Weiterhin wird davon ausgegangen, dass der grafische Editor 50 abstrahierte Formen von einer Mehrzahl von Bausteinen, insbesondere einer Mehrzahl von Mikrocontrollern gespeichert hat.

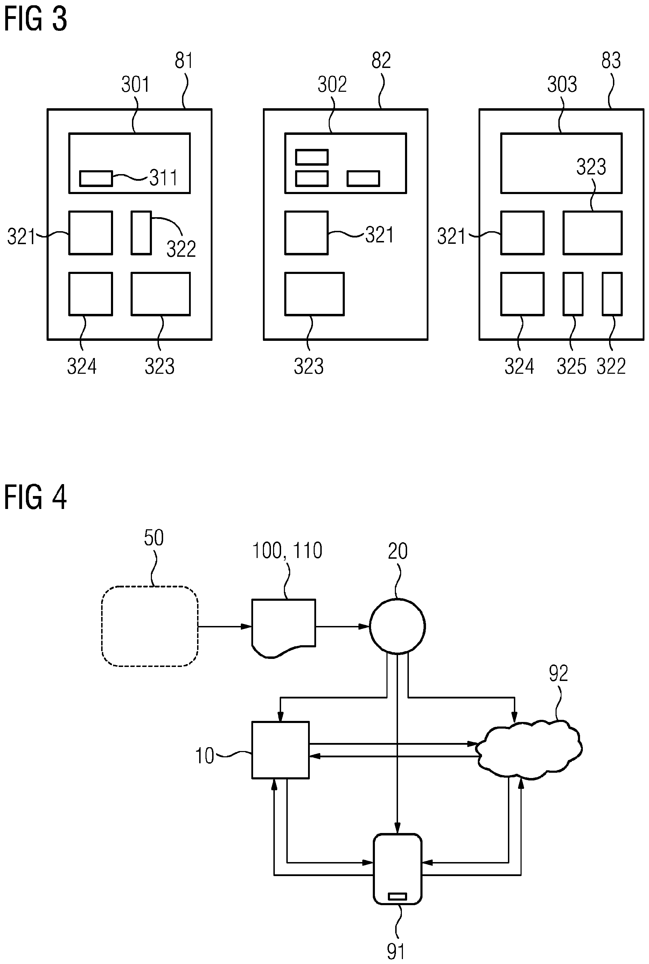

In diesem Fall kann der grafische Editor 50 vorteilhaft aus dem Betriebsablauf 60 bestimmen, welche Bausteine notwendig sind, um den Betriebsablauf 60 ausführen zu können. Da der Fokus dabei üblicherweise auf dem einzelnen Mikrocontroller liegt und die anderen Bausteine beliebiger sind, ist es zweckmäßig, wenn für jeden möglichen Mikrocontroller, also jeden, für den eine abstrahierte Form vorliegt, eine solche Zusammenstellung der Bausteine erstellt wird. Dabei können beispielsweise mehr oder weniger Peripherie-ICs notwendig sein in Abhängigkeit davon, welcher Mikrocontroller 30 eingesetzt wird. Figur 3 zeigt das Ergebnis einer solchen Zusammenstellung für drei verschiedene Mikrocontroller 301...303 in schematischer Form.

Ein erster Hardware-Entwurf 81 umfasst einen ersten Mikrocontroller 301. Dieser erste Mikrocontroller 301 ist von einem Hersteller oder von einer Baureihe, die eine WiFi-Schnittstelle 311 mitumfasst. Die WiFi-Schnittstelle 311 ist also mit anderen Worten Teil des Mikrocontrollers 301 selbst und muss nicht mehr als zusätzlicher Peripherie-IC zugefügt werden. Darüber hinaus umfasst der erste Hardware-Entwurf 81 einen UMTS-IC 321, einen CAN-Bus-IC 322, einen Speicherchip 323 und einen Ethernet-IC 324. Diese Peripherie ICs müssen also einzeln oder als ICs, die mehrere der Funktionen bereitstellen, zugefügt werden. Die Darstellung des Hardware-Entwurfs 81 der Figur 3 zeigt dabei eine schematisierte Platine, auf der der Mikrocontroller 301 und die Peripherie-ICs 321...324 angeordnet sind. Nach der Erstellung des Hardware-Entwurfs 81 kann der grafische Editor 50 diesen aber genauso gut als Liste oder in einer anderen Form ausgeben.

Ein zweiter Hardware-Entwurf 82 umfasst einen zweiten Mikrocontroller 302 eines anderen Fabrikats als der erste Mikrocontroller 301. Der zweite Mikrocontroller 302 umfasst nicht nur eine WiFi-Schnittstelle 311, sondern auch eine CAN-Schnittstelle 312 und eine Ethernet-Schnittstelle 313. Da ein Teil der Peripherie-ICs 321...324 hier also unnötig sind, umfasst der zweite Hardware-Entwurf 82 als eigene Peripherie-ICs nur einen Speicherchip 323 und einen UMTS-IC 321.

Ein dritter Hardware-Entwurf 83 umfasst einen dritten Mikrocontroller 303 eines weiteren Fabrikats. Der dritte Mikrocontroller 303 umfasst im Gegensatz zum ersten und zweiten Mikrocontroller 301, 302 keine der genannten Schnittstellen 311...313. Da ein Teil der Peripherie-ICs 321...324 hier also unnötig sind, umfasst der zweite Hardware-Entwurf 82 alle vorgenannten Peripherie-ICs 321...324 und zusätzlich auch einen WiFi-IC 325.

Für die beschriebenen Hardware-Entwürfe 81...83 wurde davon ausgegangen, dass der Betriebsablauf 60 alle der genannten Schnittstellen erfordert. Anhand der sich ergebenden Hardware-Entwürfe 81...83 kann entschieden werden, welcher davon umgesetzt wird, welcher Mikrocontroller 301...303 also verwendet werden soll und welche Peripherie-ICs 321...325 dazu zusätzlich erforderlich sind. Üblicherweise werden dabei Rahmenbedingungen wie beispielsweise Verfügbarkeit, Platinenplatz und Preis berücksichtigt.

Auf diese Weise kann also für einen gegebenen Betriebsablauf 60 eine unter den vorhandenen Rahmenbedingungen ideale Umsetzung in Hardware-Komponenten gefunden werden. Daneben ist es aber auch möglich, für den Betriebsablauf 60 mehrere Lösungen mit unterschiedlicher Hardware zu finden.

Durch die Gesamtheit des beschriebenen Systems wird vorteilhaft ein Vendor-Locking vermieden. Vendor-Locking bezeichnet dabei den praktischen Zwang, bei einem bestimmten Hersteller für Hardware-Komponenten zu bleiben, wobei sich dieser Zwang darin äußert, dass eine Änderung des Herstellers, also das Verwenden eines anderen Fabrikats speziell beim Mikrocontroller 301...303 hohe Folgekosten und Folgeaufwände nach sich zieht. Diese Folgeaufwände bestehen darin, dass bei einer herkömmlichen Entwicklung der Hardware von vornherein keine Informationen direkt verfügbar sind, wie der Betriebsablauf 60 mit einer veränderten Hardware umzusetzen ist. Auch wenn dieser Schritt manuell nachvollzogen ist, muss aber eine herkömmlich Firmware mit hohem Aufwand neugeschrieben oder zumindest angepasst werden an neue Hardware-Komponenten mit veränderten Fähigkeiten. In dem hier vorgestellten System hingegen liegt die Information zur Umsetzung des Betriebsablaufs 60 direkt und gewissermaßen auf Knopfdruck vor. Weiterhin muss keine Firmware umgeschrieben werden. Vielmehr kann die Konfigurationsdatei, soweit sie überhaupt geändert werden muss, direkt aus dem grafischen Editor 50 erzeugt werden und funktioniert dann mit dem Betriebssystem 40, das auf einem geänderten Mikrocontroller 301...303 läuft.

Es versteht sich, dass das Betriebssystem 40 für verschiedene Mikrocontroller 301...303 vorliegen muss. Da die Erstellung des Betriebssystems für die Mikrocontroller 301...303 aber ein einmaliger Vorgang ist, der vom Betriebsablauf 60 und überhaupt von der Anwendung unabhängig ist, kann das aber als gegeben vorausgesetzt werden.

Neben der Weitergabe der Konfigurationsdatei 100, 110 an die Steuerung 10 kann die Konfigurationsdatei 100, 110 auch an andere Geräte verteilt werden. Figur 4 zeigt, wie die Konfigurationsdatei 100, 110 über das Internet an die Steuerung 10, an ein Smartphone 91 und an einen Cloud-Service 92 verteilt wird.

Besonders vorteilhaft ist dabei, dass das Smartphone 91 und der Cloud-Service 92 aus der Konfigurationsdatei 100, 110 eine eigene Verhaltensweise ermitteln können, wobei dazu entsprechende Apps, also Programme, vorhanden sind. Da die Konfigurationsdatei 100, 110 den Betriebsablauf 60 wiedergibt, kann beispielsweise das Smartphone 91 daraus ablesen, welche Daten aus Ausgängen der Steuerung 10 ausgelesen werden können, welche Daten der Betriebsablauf 60 also produziert und zur Verfügung stellt. Die Steuerung 10 und das Smartphone 91 können also direkt kommunizieren und Daten austauschen, ohne dass dabei in einem Extra-Schritt geklärt werden muss oder durch ein Protokoll festgelegt werden muss, wie welche Daten von der Steuerung 10 bereitgestellt werden, da sowohl die Steuerung 10 als auch das Smartphone 91 dies bereits wissen.

Bei einer herkömmlichen monolithischen Firmware für die Steuerung 10 wäre ein analoges Vorgehen nur unter großen Schwierigkeiten möglich. Aus der Firmware an sich lässt sich zwar im Prinzip ablesen, welche Daten ausgegeben werden, das ist aber komplex. Weiterhin umfasst eine Firmware meist nur die nötigsten Informationen zu Dateneingaben und Datenausgaben, da alle Informationen, die der Mikrocontroller 301...303 nicht verwendet, eine Verschwendung von Speicherplatz darstellen. Eine Kommunikation zwischen dem Smartphone 91 und der Steuerung 10 wäre in diesem Fall möglicherweise auf eine weniger zuverlässige menschliche Schnittstelle angewiesen, mit der die nötigen Informationen zwischen den Entwicklergruppen ausgetauscht werden.

Ebenso kann die Konfigurationsdatei 100, 110 von einem Cloud-Service 92 verwendet werden, um eine Kommunikation sowohl mit der Steuerung 10 als auch mit dem Smartphone 91 herzustellen. Auch hier ist vorteilhaft, dass eine direkt lesbare Beschreibung des Betriebsablaufs vorliegt, da der Cloud-Service 92 ermitteln kann, welche Eingaben und Ausgaben von der Steuerung 10 oder dem Smartphone 91 vorliegen können. Wird die Konfigurationsdatei 100, 110 an einen geänderten Betriebsablauf 60 angepasst, wird sie bevorzugt an alle gekoppelten Systeme, also das Smartphone 91 und den Cloud-Service 92 ebenfalls verschickt, so dass die Kommunikation mit der Steuerung 10 reibungslos weiter funktioniert. Ein manueller Eingriff in die im Smartphone 91 oder dem Cloud-Service 92 laufende Software ist unnötig.

### Bezugszeichenliste

10 Steuerung
14 WiFi-Chip
15 Router
20 Internet
31 Eingangsschnittstelle
32, 33 Ausgangsschnittstellen
41...44 Programmblöcke
40 Betriebssystem
50 grafischer Editor
51 Bildfläche
60 Betriebsablauf
61...64 abstrahierte Komponenten
81...83 Hardware-Entwurf
91 Smartphone
92 Cloud-Service
100, 110 Konfigurationsdatei
30, 301...303 Mikrocontroller
311 Wifi-Schnittstelle
312 CAN-Schnittstelle
313 Ethernet-Schnittstelle
321 UMTS-IC
322 CAN-Bus-IC
323 Speicherchip
324 Ethernet-IC
325 WiFi-IC

## Patentansprüche

1. Verfahren zur rechnergestützten Konfiguration eines Endgeräts (10), dessen Betrieb von einen Mikrocontroller (30, 301...303) gesteuert wird, mit den Schritten
- Zusammenstellen eines Betriebsablaufs (60) für das Endgerät (10) unter Verwendung von abstrahierten Komponenten (61...64) aus einer Menge von bereitgestellten abstrahierten Komponenten (61...64) in einer Konfigurationssoftware (50), die eine grafische Benutzeroberfläche (51) aufweist, wobei die Menge von abstrahierten Komponenten (61...64) Dateneingänge, Datenausgänge und wenigstens eine State Machine als hardwareunabhängige Abstraktion einer Recheneinheit umfassen,
- Erzeugen einer Konfigurationsdatei (100, 110) aus dem Betriebsablauf (60), wobei die Konfigurationsdatei (100, 110) eine Textdatei ist,
- Überspielen der Konfigurationsdatei (100, 110) auf das Endgerät (10),
- Verarbeiten der Konfigurationsdatei (100, 110) durch eine auf dem Mikrocontroller (30, 301...303) des Endgeräts (10) laufende Betriebssoftware (40) und Steuern des Endgeräts (10) derart, dass der Betriebsablauf (60) durchgeführt wird.

2. Verfahren nach Anspruch 1, bei dem das Verarbeiten der Konfigurationsdatei (100, 110) durch die Betriebssoftware (40) eine Auswertung der Konfigurationsdatei (100, 110) und ein Aufrufen einzelner vorkompilierter Softwareblöcke (41...44) basierend auf der Konfigurationsdatei (100, 110) umfasst.

3. Verfahren nach Anspruch 1 oder 2, bei dem die Konfigurationsdatei (100, 110) das JSON-Format verwendet.

4. Verfahren nach einem der vorangehenden Ansprüche, bei dem die Konfigurationssoftware (50) abstrahierte Formen von einer Mehrzahl von Mikrocontrollern (30, 301...303) und Peripherie-ICs (321...325) aufweist, wobei diese abstrahierten Formen die Eingabe- und Ausgabe-Möglichkeiten der Mikrocontroller (30, 301...303) und Peripherie-ICs (321...325) abbilden und bei dem nach Eingabe eines Betriebsablaufs (60) für einen oder mehrere verschiedenen Mikrocontroller (30, 301...303) anhand der abstrahierten Formen ermittelt wird, welche Peripherie-ICs (321...325) zusätzlich zum Mikrocontroller (30, 301...303) benötigt werden und das Ergebnis ausgegeben wird.

5. Verfahren nach einem der vorangehenden Ansprüche, bei dem die Konfigurationssoftware (50) eine abstrahierte Form für jeden der im Endgerät (10) verwendeten Mikrocontroller (30, 301...303) und, sofern vorhanden, Peripherie-ICs (321...325) aufweist, wobei diese abstrahierten Formen die Eingabe- und Ausgabe-Möglichkeiten des jeweiligen Mikrocontrollers (30, 301...303) oder Peripherie-ICs (321...325) abbilden und bei dem nach Eingabe eines Betriebsablaufs (60) geprüft wird, ob der mit den abstrahierten Komponenten (61...64) aufgebaute Betriebsablauf (60) unter Verwendung der abstrahierten Formen durchführbar ist und das Ergebnis der Prüfung ausgegeben wird.

6. Verfahren nach einem der vorangehenden Ansprüche, bei dem die Konfigurationssoftware (50) die Menge und/oder Verwendung der angebotenen abstrahierten Komponenten (61...64) so einschränkt, dass ein damit zusammengestellter Betriebsablauf (60) von der Hardware des Endgeräts (10) durchführbar ist.

7. Verfahren nach Anspruch einem der vorangehenden Ansprüche, bei dem die Konfigurationsdatei (100, 110) einem Cloud-basierten Rechensystem (92) übermittelt wird und bei dem das Rechensystem (92) basierend auf der Konfigurationsdatei (100, 110) eine Datenverbindung zum Endgerät (10) aufbaut und Daten vom Endgerät (10) empfängt.

8. Verfahren nach Anspruch 7, bei dem für die Verbindung zwischen dem Rechensystem (92) und dem Endgerät (10) das MQTT-Protokoll verwendet wird.

9. Endgerät (10) mit einem Mikrocontroller (30, 301...303) als Steuereinheit und einer Betriebssoftware (40), die auf dem Mikrocontroller (30, 301...303) ausführbar ist, wobei die Betriebssoftware (40) ausgestaltet ist, eine auf dem Endgerät (10) gespeicherte Konfigurationsdatei (100, 110) zu verarbeiten, wobei die Konfigurationsdatei (100, 110) eine Textdatei ist und einen Betriebsablauf (60) für das Endgerät (10) repräsentiert, und das Endgerät (10) so zu steuern, dass der Betriebsablauf (60) durchgeführt wird.

10. Endgerät (10) nach Anspruch 9, bei dem die Betriebssoftware (40) kompilierte Code-Blöcke (41...44) umfasst, die basierend auf der Konfigurationsdatei (100, 110) aufgerufen werden.

11. Betriebsverfahren für ein Endgerät (10) mit einem Mikrocontroller (30, 301...303) als Steuereinheit, bei dem eine auf dem Endgerät (10) gespeicherte Konfigurationsdatei (100, 110) verarbeitet wird, wobei die Konfigurationsdatei (100, 110) eine Textdatei ist und einen Betriebsablauf (60) für das Endgerät (10) repräsentiert, und das Endgerät (10) so gesteuert wird, dass der Betriebsablauf (60) durchgeführt wird.

12. Betriebsverfahren nach Anspruch 11, bei dem kompilierte Code-Blöcke (41...44) so aufgerufen werden, dass der in der Konfigurationsdatei (100, 110) angegebene Betriebslauf (60) durchgeführt wird.

13. Computerprogrammprodukt mit Programmbefehlen zur Durchführung des Verfahrens nach Anspruch 11 oder 12.
